# EUROPÄISCHE PATENTANMELDUNG

(11) **EP 4 099 103 A1**
(43) Veröffentlichungstag der Anmeldung: **07.12.2022**
(21) Anmeldenummer: 21177797.4
(22) Anmeldetag: 04.06.2021
(51) Int. Cl.: G05B 13/04

(54) **VERFAHREN UND KONFIGURATIONSSYSTEM ZUM KONFIGURIEREN EINER MASCHINENSTEUERUNG**

(71) Anmelder: Siemens Aktiengesellschaft, 80333 München (DE)
(72) Erfinder: Hein, Daniel, 81549 München (DE); Stöckel, Tina, 91088 Bubenreuth (DE); Tokic, Michel, 88069 Tettnang (DE); von Beuningen, Anja, 99085 Erfurt (DE)

(57) **Zusammenfassung**

Zum Konfigurieren einer Maschinensteuerung (CTL) wird eine Vielzahl von jeweils eine Zusammenschaltung (CC) vorgegebener Steuerungskomponenten (C1-C4) spezifizierenden Konfigurationsdatensätzen (CR) generiert. Erfindungsgemäß wird für eine jeweils spezifizierte Zusammenschaltung (CC) eine Performanz (PV) sowie eine Komplexität (CV) dieser Zusammenschaltung (CC) ermittelt. Darüber hinaus wird für die Vielzahl von Konfigurationsdatensätzen (CR) eine Pareto-Front (PF) ermittelt, wobei eine Erhöhung der Performanz (PV) sowie eine Verringerung der Komplexität (CV) der jeweils spezifizierten Zusammenschaltung (CC) als Pareto-Zielkriterien verwendet werden. Aus Konfigurationsdatensätzen der Pareto-Front (PF) wird dann ein optimierter Konfigurationsdatensatz (CRO) ermittelt und zum Konfigurieren des Maschinensteuerung (CTL) ausgegeben.

## Beschreibung

Komplexe Maschinen, wie z.B. Roboter, Motoren, Werkzeugmaschinen, Turbinen, hydraulische Maschinen, Pressen, Fertigungsanlagen oder Kraftfahrzeuge benötigen für einen produktiven Betrieb in der Regel eine komplex konfigurierte Steuerung, um eine Performanz der gesteuerten Maschine gezielt zu optimieren. Die zu optimierende Performanz kann z.B. eine Leistung, einen Ertrag, einen Ressourcenbedarf, einen Wirkungsgrad, eine Präzision, einen Schadstoffausstoß, eine Stabilität, einen Verschleiß und/oder andere Zielparameter der Maschine betreffen.

Maschinensteuerungen werden häufig während einer Inbetriebnahme der zu steuernden Maschine im Rahmen eines oder mehrerer Tests von Experten in optimierter Weise konfiguriert. Eine solche manuelle Optimierung einer Konfiguration ist jedoch oft verhältnismäßig zeitaufwändig.

Zur automatischen Konfiguration von Maschinensteuerungen werden in zunehmendem Maße datengetriebene Verfahren des maschinellen Lernens verwendet. Mittels derartiger Lernverfahren kann eine Maschinensteuerung darauf trainiert werden, aus aktuellen Betriebssignalen der Maschine diejenigen Steueraktionen abzuleiten, die spezifisch ein gewünschtes oder anderweitig optimales Verhalten der Maschine bewirken. Zu diesen Zwecken steht eine Vielzahl von bekannten maschinellen Lernverfahren, insbesondere Verfahren des bestärkenden Lernens zur Verfügung.

Eine durch datengetriebene Lernverfahren optimierte Konfiguration ist jedoch in vielen Fällen hinsichtlich ihrer Wirkungsbeziehungen durch Experten kaum nachvollziehbar oder interpretierbar. Dies erschwert häufig eine Validierung oder Weiterentwicklung derartiger Konfigurationen.

Es ist Aufgabe der vorliegenden Erfindung, ein Verfahren und ein Konfigurationssystem zum Konfigurieren einer Maschinensteuerung anzugeben, durch die sich besser interpretierbare Konfigurationen automatisch erstellen lassen.

Gelöst wird diese Aufgabe durch ein Verfahren mit den Merkmalen des Patentanspruchs 1, durch ein Konfigurationssystem mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Zum Konfigurieren einer Maschinensteuerung für eine Maschine wird eine Vielzahl von jeweils eine Zusammenschaltung vorgegebener Steuerungskomponenten spezifizierenden Konfigurationsdatensätzen generiert. Erfindungsgemäß wird für eine jeweils spezifizierte Zusammenschaltung eine Performanz für ein Steuern der Maschine mittels dieser Zusammenschaltung sowie eine Komplexität dieser Zusammenschaltung ermittelt. Darüber hinaus wird für die Vielzahl von Konfigurationsdatensätzen eine Pareto-Front ermittelt, wobei eine Erhöhung der Performanz sowie eine Verringerung der Komplexität der jeweils spezifizierten Zusammenschaltung als Pareto-Zielkriterien verwendet werden. Aus Konfigurationsdatensätzen der Pareto-Front wird dann ein optimierter Konfigurationsdatensatz ermittelt und zum Konfigurieren des Maschinensteuerung ausgegeben.

Zum Ausführen des erfindungsgemäßen Verfahrens sind ein Konfigurationssystem, ein Computerprogrammprodukt sowie ein computerlesbares, vorzugsweise nichtflüchtiges Speichermedium vorgesehen.

Das erfindungsgemäße Verfahren sowie das erfindungsgemäße Konfigurationssystem können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Insofern eine Pareto-Front hinsichtlich der Performanz und der Komplexität einer jeweiligen Zusammenschaltung ermittelt wird, kann eine Zusammenschaltung bzw. Konfiguration ermittelt werden, die in der Regel sowohl performant ist als auch eine geringe Komplexität aufweist. Konfigurationen mit geringer Komplexität sind in der Regel besser durch Experten interpretierbar und damit leichter validierbar und/oder weiterentwickelbar. Als Pareto-Front sei in diesem Zusammenhang auch eine Menge von Konfigurationsdatensätzen verstanden, deren Abstand zu einem mathematisch exakten Pareto-Optimum z.B. einen gegebenen Schwellenwert unterschreitet. Durch eine Beschränkung auf Konfigurationsdatensätze der Pareto-Front wird ein Raum möglicher Konfigurationen in der Regel erheblich eingeschränkt, wobei insbesondere nicht optimale Konfigurationen wegfallen. Die Ermittlung des optimierten Konfigurationsdatensatzes sowie ggf. weitergehende Optimierungen können so erheblich vereinfacht werden.

Vorteilhafte Ausführungsformen und Weiterbildungen der Erfindung sind in den abhängigen Ansprüchen angegeben.

Vorteilhafterweise kann zum Ermitteln der Performanz einer jeweiligen Zusammenschaltung ein Simulationsmodell der Maschine, ein datengetriebenes Modell der Maschine, die Maschine selbst und/oder eine dazu ähnliche Maschine anhand der jeweiligen Zusammenschaltung, insbesondere in einem geschlossenen Regelkreis gesteuert werden. Daraus kann eine resultierende Performanz der Maschine ermittelt, insbesondere gemessen werden. Als Simulationsmodell kann vorzugsweise ein Surrogat-Modell der Maschine verwendet werden, das weniger Rechenressourcen als eine vollständige Simulation erfordert.

Weiterhin kann zum Ermitteln der Komplexität einer jeweiligen Zusammenschaltung eine Anzahl darin enthaltener Steuerungskomponenten, Schnittstellen und/oder Regelschleifen, und/oder eine Baumtiefe eines die jeweilige Zusammenschaltung spezifizierenden Graphs ermittelt werden. Aus der Anzahl der Steuerungskomponenten, Schnittstellen und/oder Regelschleifen, und/oder aus der Baumtiefe kann dann ein die Komplexität der jeweiligen Zusammenschaltung quantifizierender Komplexitätswert abgeleitet werden. Die vorstehenden Kriterien erlauben eine besonders einfache Bewertung der Komplexität einer jeweiligen Zusammenschaltung.

Nach einer vorteilhaften Ausführungsform der Erfindung können für die Steuerungskomponenten, Schnittstellen und/oder Regelschleifen jeweils Gewichtswerte, insbesondere von einem Benutzer und/oder einer Datenbank eingelesen werden. Als Anzahl der Steuerungskomponenten, Schnittstellen und/oder Regelschleifen einer jeweiligen Zusammenschaltung kann dann eine mit den jeweiligen Gewichtswerten gewichtete Anzahl ermittelt werden. Insbesondere können weniger komplexen Steuerungskomponenten, Schnittstellen oder Regelschleifen jeweils geringere Gewichtswerte zugeordnet werden als komplexeren Steuerungskomponenten, Schnittstellen oder Regelschleifen. So kann einer einfachen Regelungsfunktion ein geringerer Gewichtswert und einer auf einem nichtlinearen Gleichungssystem basierenden Steuerungskomponente, wie z.B. einem neuronalen Netz ein höherer Gewichtswert zugeordnet werden. Komplexere Komponenten gehen damit in die gewichtete Anzahl mit einem höheren Gewicht ein als weniger komplexe Komponenten. Auf diese Weise können Zusammenschaltungen mit weniger komplexen Komponenten bei der Ermittlung der Pareto-Front bevorzugt werden.

Gemäß einer weiteren vorteilhaften Ausführungsform der Erfindung kann der optimierte Konfigurationsdatensatz aus den Konfigurationsdatensätzen der Pareto-Front selektiert oder durch Interpolation von Konfigurationsdatensätzen der Pareto-Front ermittelt werden. Während eine Selektion besonders einfach auszuführen ist, können bei einer Interpolation auch mehrere vorteilhafte Eigenschaften kombiniert werden.

Nach einer weiteren vorteilhaften Ausführungsform der Erfindung kann eine Maschinentypangabe eingelesen oder abgefragt werden. Abhängig von der Maschinentypangabe können dann maschinenspezifische Steuerungskomponenten zum Zusammenschalten vorgegeben werden. Auf diese Weise lässt sich das erfindungsgemäße Verfahren gezielt auf für eine konkrete Maschine vorgesehene oder verfügbare Steuerungskomponenten anwenden oder einschränken.

Weiterhin kann einer jeweiligen Steuerungskomponente ein Komponententyp und/oder ein Schnittstellentyp zugeordnet werden. Bei der Generierung eines jeweiligen Konfigurationsdatensatzes kann dann geprüft werden, ob Komponententypen und/oder Schnittstellentypen zusammenzuschaltender Steuerungskomponenten kompatibel sind. Derartige Komponententypen oder Schnittstellentypen können dabei insbesondere Angaben über Datentypen, über Maßeinheiten, über einzuhaltende Nebenbedingungen und/oder über deren Kombinierbarkeit umfassen. Steuerungskomponenten können insbesondere dann als kompatibel bewertet werden, wenn Datentypen oder Maßeinheiten verschiedener Steuerungskomponenten übereinstimmen und/oder wenn Nebenbedingungen verschiedener Steuerungskomponenten simultan erfüllbar sind.

Nach einer weiteren vorteilhaften Ausführungsform der Erfindung können die Konfigurationsdatensätze durch ein performanzgetriebenes und/oder komplexitätsgetriebenes genetisches Optimierungsverfahren generiert werden. Insbesondere kann für das genetische Optimierungsverfahren eine Fitnessfunktion vorgesehen sein, die einer höheren Performanz und/oder einer geringeren Komplexität eine größere Fitness zuordnet als einer geringeren Performanz und/oder einer größeren Komplexität. Auf diese Weise kann eine Pareto-Optimierung und damit die Pareto-Front bevorzugt in Richtung performanter und/oder weniger komplexer Konfigurationen getrieben werden. Zur Durchführung derartiger genetischer Optimierungsverfahren steht eine Vielzahl von effizienten Standardroutinen zur Verfügung.

Vorteilhafterweise können die Konfigurationsdatensätze der Pareto-Front in das genetische Optimierungsverfahren eingespeist werden. Auf diese Weise kann das genetische Optimierungsverfahren mit vorteilhaften Konfigurationen angereichert werden.

Weiterhin kann eine Abfolge aus dem performanzgetriebenen und/oder komplexitätsgetriebenen genetischen Optimierungsverfahren, der Ermittlung der Pareto-Front und der Ermittlung des optimierten Konfigurationsdatensatzes iterativ wiederholt werden. Es erweist sich, dass auf diese Weise ein größerer Raum möglicher Konfigurationen abgedeckt werden kann, und dass die so ermittelten optimierten Konfigurationen in vielen Fällen zu genaueren, zuverlässigeren und/oder robusteren Steuerungen führen.

Ein Ausführungsbeispiel der Erfindung wird nachfolgend anhand der Zeichnung näher erläutert. Dabei veranschaulichen jeweils in schematischer Darstellung:
- Figur 1: eine Maschine mit einer Maschinensteuerung zum Steuern der Maschine und
- Figur 2: ein erfindungsgemäßes Konfigurationssystem beim Konfigurieren einer Maschinensteuerung

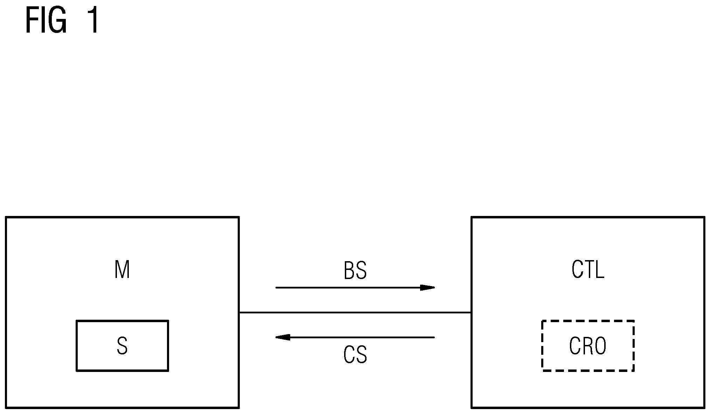

Figur 1 veranschaulicht in schematischer Darstellung eine Maschine M, die mit einer Maschinensteuerung CTL zum Steuern der Maschine M gekoppelt ist. Die Maschine M kann insbesondere ein Roboter, ein Motor, eine Werkzeugmaschine, eine Produktionsmaschine, eine Turbine, eine hydraulische Presse, eine Fertigungsanlage, ein Kraftfahrzeug, ein 3-D-Drucker, ein Computer, eine andere Maschine, ein anderes Gerät, eine andere Anlage oder eine Komponente davon sein.

Die Maschine M verfügt über eine Sensorik S zum fortlaufenden Messen und/oder Erfassen von Betriebssignalen BS der Maschine M sowie ggf. von Daten aus einer Umgebung der Maschine M.

Die Maschinensteuerung CTL ist rechnergestützt konfigurierbar und kann als Teil der Maschine M oder ganz oder teilweise extern zur Maschine M implementiert sein. Die Maschinensteuerung CTL soll mittels der Erfindung derart konfiguriert werden, dass die Maschine M in optimierter Weise gesteuert wird. Unter einem Steuern sei dabei auch ein Regeln, insbesondere durch eine oder mehrere geschlossene und/oder offene Regelkreise, sowie eine Ausgabe und Verwendung von steuerungsrelevanten, d. h. zur gezielten Beeinflussung der Maschine M beitragenden Daten oder Steuersignalen verstanden.

Im vorliegenden Ausführungsbeispiel soll die Maschinensteuerung CTL mittels eines Verfahrens des maschinellen Lernens so konfiguriert werden, dass ein Betrieb der Maschine M abhängig von den erfassten Betriebssignalen BS optimiert wird. Unter dem Begriff Optimieren sei allgemein auch ein Annähern an ein Optimum verstanden. Dabei soll insbesondere eine Performanz der Maschine M erhöht werden.

Ein Steuerungs- oder Regelverhalten der Maschinensteuerung CTL wird durch ihre Konfiguration festgelegt. Zur optimierten Konfiguration der Maschinensteuerung CTL wird ein optimierter Konfigurationsdatensatz CRO zur Maschinensteuerung CTL übermittelt, durch den eine Vielzahl von Einstellparametern der Maschinensteuerung CTL spezifisch eingestellt werden. Ein hierdurch eingestelltes Steuerungs- oder Regelverhalten der Maschinensteuerung CTL wird häufig auch als Policy bezeichnet. Der optimierte Konfigurationsdatensatz CRO wird durch ein erfindungsgemäßes Verfahren ermittelt.

Ein solcher das Steuer- oder Regelverhalten der Maschinensteuerung CTL festlegender Konfigurationsdatensatz kann durch unterschiedliche Datenstrukturen dargestellt werden. So kann ein jeweiliger Konfigurationsdatensatz Sollwerte, Sensorwerte, Parameter, Variablen, Aktionsauswahlregeln, Programmbefehle, einen Programmcode, einen Syntaxbaum, Entscheidungsvariablen, einen mathematischen Ausdruck, eine mathematische Funktion, eine Programmfunktion, einen Klassifikator, neuronale Gewichte, einen PID-Regler (PID: proportional integral derivative), einen sonstigen Regler und/oder andere Konfigurationsdaten umfassen oder beschreiben. Erfindungsgemäß wird durch einen Konfigurationsdatensatz insbesondere eine Zusammenschaltung von Steuerungskomponenten der Maschinensteuerung CTL spezifiziert.

Durch die Sensorik S werden die fortlaufend erfassten Betriebssignale BS der Maschine M zur Maschinensteuerung CTL übermittelt. Die Betriebssignale BS können dabei Angaben über Betriebszustände der Maschine M, über Positionen oder Bewegungen von Komponenten, über Schaltzustände, über Steuerzustände, über Steueraktionen, über physikalische, chemische oder elektrische Messgrößen und/oder über andere für den Betrieb der Maschine M relevante Parameter umfassen.

Abhängig von den übermittelten Betriebssignalen BS werden durch die Maschinensteuerung CTL Steuersignale CS generiert, die von der Maschinensteuerung CTL zum optimierten Steuern der Maschine M zu dieser übermittelt werden. Die Generierung der Steuersignale CS erfolgt gemäß dem durch den optimierten Konfigurationsdatensatz CRO konfigurierten Steuer- oder Regelverhalten der Maschinensteuerung CTL.

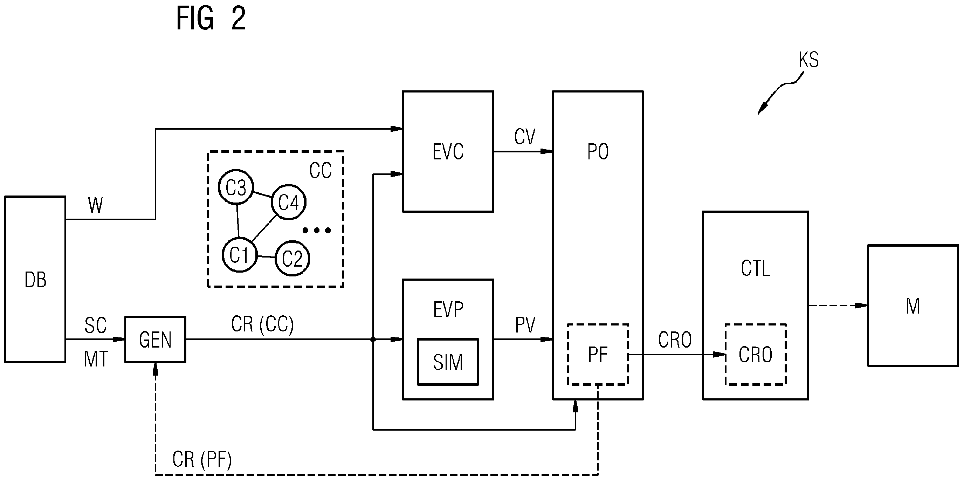

Figur 2 zeigt in schematischer Darstellung ein erfindungsgemäßes Konfigurationssystem KS beim Konfigurieren einer Maschinensteuerung CRL. Insofern in Figur 2 die gleichen oder korrespondierenden Bezugszeichen wie in Figur 1 verwendet werden, bezeichnen diese Bezugszeichen die gleichen oder korrespondierenden Entitäten, die insbesondere wie oben beschrieben implementiert oder ausgestaltet sein können.

Die Maschinensteuerung CTL kann einen Teil des Konfigurationssystems KS bilden oder ganz oder teilweise extern zum Konfigurationssystem KS angeordnet sein. Das Konfigurationssystem KS und/oder die Maschinensteuerung CTL weisen einen oder mehrere Prozessoren zur Durchführung des erfindungsgemäßen Verfahrens sowie einen oder mehrere Speicher zum Speichern von zu verarbeitenden Daten auf. Wie oben bereits erwähnt, soll die Maschinensteuerung CTL mittels des Konfigurationssystems KS derart konfiguriert werden, dass die Maschine M in optimierter Weise gesteuert wird.

Als Ausgangspunkt für die Konfiguration wird eine Menge von für die Steuerung der Maschine M spezifischen Steuerungskomponenten vorgegeben. Als Steuerungskomponenten können dabei insbesondere PID-Regler, Differenzierglieder, Integrierglieder, Proportionalglieder, deren Einstellparameter, Filter, Sollwerte, Sensoren, Sensorwerte, aber auch Verarbeitungsfunktionen wie mathematische/numerische Funktionen, Gleichungen oder Gleichungssysteme, neuronale Netze, Entscheidungsvariablen, Programmanweisungen, Aktionsauswahlregeln oder Klassifikatoren vorgesehen sein. Zur Festlegung dieser Menge von maschinenspezifischen Steuerungskomponenten werden durch das Konfigurationssystem KS Komponentenangaben SC aus einer Datenbank DB eingelesen, die diese Menge spezifizieren. Alternativ oder zusätzlich kann durch das Konfigurationssystem KS eine Maschinentypangabe MT aus der Datenbank DB eingelesen werden. Abhängig von der eingelesenen Maschinentypangabe MT können dann durch das Konfigurationssystem KS maschinenspezifische Steuerungskomponenten ausgewählt werden.

Im vorliegenden Ausführungsbeispiel und in Figur 2 sind die vorgegebenen Steuerungskomponenten als C1, C2, C3, C4,... bezeichnet.

Den vorgegebenen Steuerungskomponenten C1, C2, C3, C4,... ist jeweils ein Komponententyp und/oder ein Schnittstellentyp zugeordnet. Die Komponententypen oder Schnittstellentypen können dabei insbesondere Angaben über Datentypen, über Maßeinheiten, über einzuhaltende Nebenbedingungen und/oder über deren Kombinierbarkeit umfassen.

Weiterhin werden durch das Konfigurationssystem KS Gewichtswerte W aus der Datenbank DB eingelesen, die jeweils einer vorgegebenen Steuerungskomponente, einer Schnittstelle zwischen Steuerungskomponenten und/oder einer Regelschleife zugeordnet sind. Durch einen jeweiligen Gewichtswert W wird eine Komplexität der betreffenden Steuerungskomponente, Schnittstelle oder Regelschleife quantifiziert. So kann einer einfachen Regelungsfunktion ein geringerer Gewichtswert W und einer auf einem nichtlinearen Gleichungssystem basierenden Steuerungskomponente, wie zum Beispiel einem neuronalen Netz, ein höherer Gewichtswert W zugeordnet werden.

Zur Ermittlung eines optimierten Konfigurationsdatensatzes CRO wird im vorliegenden Ausführungsbeispiel unter anderem ein Verfahren der genetischen Optimierung verwendet. Im Rahmen des genetischen Optimierungsverfahrens werden im Konfigurationsraum der vorgegebenen Steuerungskomponenten, hier C1, C2, C3, C4,... optimierte Konfigurationen gesucht. Zu diesem Zweck generiert ein Generator GEN des Konfigurationssystems KS eine Vielzahl von jeweils eine Zusammenschaltung CC der vorgegebenen Steuerungskomponenten C1, C2, C3, C4,... spezifizierenden Konfigurationsdatensätzen CR. Ein jeweiliger Konfigurationsdatensatz CR spezifiziert dabei insbesondere, wie die Steuerungskomponenten der Zusammenschaltung CC konkret verschaltet und parametrisiert werden.

In einer jeweiligen Iteration des genetischen Optimierungsverfahrens wird für die generierten Konfigurationsdatensätze CR jeweils eine sogenannte Fitness der hierdurch spezifizierten Zusammenschaltung CC bewertet. Konfigurationsdatensätze CR mit höherer Fitness werden mit höherer Wahrscheinlichkeit zur Generierung weiterer Konfigurationsdatensätze CR in einer nachfolgenden Iteration des genetischen Optimierungsverfahrens verwendet. Konfigurationsdatensätze CR mit geringerer Fitness werden entsprechend mit höherer Wahrscheinlichkeit aussortiert und/oder durch neu generierte Konfigurationsdatensätze ersetzt. Auf diese Weise werden durch den Generator GEN zunehmend Konfigurationsdatensätze CR mit höherer Fitness generiert. Im vorliegenden Ausführungsbeispiel wird zur Bestimmung einer jeweiligen Fitness eine Performanz für ein Steuern der Maschine M durch die betreffende Zusammenschaltung CC, eine Komplexität dieser Zusammenschaltung CC oder eine gewichtete Kombination der Performanz und der Komplexität ermittelt. Auf diese Weise wird die Generierung der Konfigurationsdatensätze CR in Richtung größerer Performanz und geringerer Komplexität getrieben. Zur Durchführung einer solchen genetischen Optimierung ist eine Vielzahl von Standardverfahren verfügbar. Alternativ oder zusätzlich können auch andere Verfahren des maschinellen Lernens zur performanzgetriebenen und/oder komplexitätsgetriebenen Optimierung verwendet werden.

Zur Generierung zulässiger Zusammenschaltungen CC werden in den Generator GEN die Komponentenangaben SC und ggf. die Maschinentypangabe MT eingespeist. Anhand des einer jeweiligen Steuerungskomponente C1, C2, C3, bzw. C4,... zugeordneten Komponententyps und/oder Schnittstellentyps generiert der Generator GEN nur solche Konfigurationsdatensätze CR, die vorgegebene Steuerungskomponenten umfassen, und bei denen die Komponententypen und/oder Schnittstellentypen zusammenzuschaltender Steuerungskomponenten kompatibel sind. Steuerungskomponenten können insbesondere dann als kompatibel bewertet werden, wenn Datentypen oder Maßeinheiten verschiedener Steuerungskomponenten übereinstimmen und/oder wenn Nebenbedingungen verschiedener Steuerungskomponenten simultan erfüllbar sind.

In Figur 2 ist eine durch einen Konfigurationsdatensatz CR spezifizierte Zusammenschaltung CC mit den zusammengeschalteten Steuerungskomponenten C1, C2, C3 und C4 exemplarisch veranschaulicht.

Die generierten Konfigurationsdatensätze CR werden vom Generator GEN zu einem Komplexitätsbewerter EVC, zu einem Performanzbewerter EVP sowie zu einem Pareto-Optimierer PO übermittelt. Die Komponenten EVC, EVP und PO sind im vorliegenden Ausführungsbeispiel als Teile des Konfigurationssystems KS implementiert.

Der Komplexitätsbewerter EVC dient dazu, für einen jeweiligen Konfigurationsdatensatz CR eine Komplexität der durch diesen Konfigurationsdatensatz CR spezifizierten Zusammenschaltung CC zu quantifizieren. Zu diesem Zweck werden in den Komplexitätsbewerter EVC auch die Gewichtswerte W eingespeist. Zur Ermittlung der Komplexität der jeweiligen Zusammenschaltung CC wird durch den Komplexitätsbewerter EVC eine mit den Gewichtswerten W gewichtete Anzahl darin enthaltener Steuerungskomponenten, Schnittstellen und/oder Regelschleifen ermittelt. Ggf. kann eine Baumtiefe eines die jeweilige Zusammenschaltung CC spezifizierenden Graphs ermittelt werden. Eine jeweilige gewichtete Anzahl von Steuerungskomponenten, Schnittstellen und/oder Regelschleifen kann dabei so bestimmt werden, dass die jeweils zugeordneten Gewichtswerte W der betreffenden Steuerungskomponenten, Schnittstellen und/oder Regelschleifen addiert werden. Die gewichtete Anzahl wird als ein die Komplexität der jeweiligen Zusammenschaltung CC quantifizierender Komplexitätswert CV durch den Komplexitätsbewerter EVC ausgegeben und in den Pareto-Optimierer PO eingespeist.

Der Performanzbewerter EVP dient dem Zweck, für einen jeweiligen Konfigurationsdatensatz CR bzw. die hierdurch spezifizierte Zusammenschaltung CC eine Performanz der mittels dieser Zusammenschaltung CC gesteuerten Maschine M zu quantifizieren. Auf diese Weise wird gewissermaßen eine Steuerperformanz der durch diesen Konfigurationsdatensatz CR konfigurierten Maschinensteuerung CTL bewertet.

Die zu ermittelnde Performanz kann insbesondere eine Leistung, einen Ertrag, eine Sollwerteinhaltung, eine Taktrate, eine Produktqualität, eine Geschwindigkeit, einen Zeitbedarf, eine Laufzeit, eine Präzision, eine Fehlerrate, einen Ressourcenverbrauch, einen Wirkungsgrad, eine Effizienz, einen Schadstoffausstoß, eine Stabilität, einen Verschleiß, eine Lebensdauer, ein physikalisches Verhalten, ein mechanisches Verhalten, ein chemisches Verhalten, ein elektrisches Verhalten, eine einzuhaltende Nebenbedingung oder andere zu optimierende Zielparameter der mittels der Zusammenschaltung CC gesteuerten Maschine M betreffen.

Der Performanzbewerter EVP ermittelt für den jeweiligen Konfigurationsdatensatz CR bzw. für die hierdurch spezifizierte Zusammenschaltung CC einen jeweiligen Performanzwert PV, der die Performanz der mittels dieser Zusammenschaltung CC gesteuerten Maschine M quantifiziert. Zu diesem Zweck verfügt der Performanzbewerter EVP über ein Simulationsmodell SIM der Maschine M. Mittels des Simulationsmodells SIM wird ein durch die jeweilige Zusammenschaltung CC bestimmtes Steuerungsverhalten der Maschine M bzw. der Maschinensteuerung CTL vorzugsweise in einer geschlossenen Regelschleife für eine Vielzahl von Zeitschritten simuliert. Dabei wird eine kumulierte Belohnung oder ein kumulierter Ertrag des simulierten Verhaltens gemessen. Vorzugsweise wird als Simulationsmodell ein sogenanntes Surrogat-Modell, zum Beispiel ein datengetriebenes Modell, der Maschine M verwendet, das in der Regel weniger Rechenressourcen als eine detaillierte physikalische Simulation erfordert. Eine auf diese Weise ermittelte kumulierte Belohnung kann als resultierender Performanzwert PV ausgegeben werden.

Der für den jeweiligen Konfigurationsdatensatz CR ermittelte Performanzwert PV wird vom Performanzbewerter EVP zum Pareto-Optimierer PO übermittelt.

Der Pareto-Optimierer PO dient zur Durchführung einer Pareto-Optimierung und insbesondere zur Ermittlung einer Pareto-Front PF, für die durch den Komplexitätsbewerter EVC und den Performanzbewerter EVP bewerteten Konfigurationsdatensätze CR.

Eine Pareto-Optimierung ist eine multikriterielle Optimierung, bei der mehrere unterschiedliche Zielkriterien, sogenannte Pareto-Zielkriterien, eigenständig berücksichtigt werden. Als Resultat der Pareto-Optimierung wird eine sogenannte Pareto-Front PF ermittelt. Eine solche Pareto-Front wird häufig auch als Pareto-Menge bezeichnet. Eine Pareto-Front, hier PF, sind diejenigen Lösungen eines multikriteriellen Optimierungsproblems, bei denen ein Zielkriterium nicht verbessert werden kann, ohne ein anderes Zielkriterium zu verschlechtern. Eine Pareto-Front bildet also gewissermaßen eine Menge optimaler Kompromisse. Insbesondere lassen sich nicht in der Pareto-Front enthaltene Lösungen hinsichtlich mindestens eines Zielkriteriums noch verbessern. Infolgedessen fällt durch eine Einschränkung auf die Pareto-Front eine Vielzahl sicher nicht optimaler Lösungen weg. Insofern eine Pareto-Front in der Regel nur einen sehr kleinen Teil eines möglichen Lösungsraums umfasst, reduziert sich durch Einschränkung auf eine Pareto-Front ein nachfolgender Selektions- oder weiterer Optimierungsaufwand beträchtlich.

Erfindungsgemäß wird durch den Pareto-Optimierer PO eine Pareto-Front PF ermittelt, wobei die Komplexität und die Performanz der Zusammenschaltungen CC als Pareto-Zielkriterien verwendet werden. Als Pareto-Front PF sei dabei auch eine Menge von Konfigurationsdatensätzen verstanden, deren Abstand zu einem mathematisch exakten Pareto-Optimum, zum Beispiel einem gegebenen Schwellenwert, unterschreitet. Die Optimierung erfolgt erfindungsgemäß in Richtung größerer Performanz und kleinerer Komplexität. Für derartige Pareto-Optimierungen steht eine Vielzahl von Standardroutinen zur Verfügung.

Im vorliegenden Ausführungsbeispiel wird durch den Pareto-Optimierer PO abhängig von den übermittelten Komplexitätswerten CV und Performanzwerten PV der generierten Konfigurationsdatensätze CR eine Pareto-Front PF innerhalb der Konfigurationsdatensätze CR ermittelt. Aus der resultierenden Pareto-Front PF wird dann ein optimierter Konfigurationsdatensatz CRO selektiert oder interpoliert. Ggf. können bei der Selektion oder Interpolation des optimierten Konfigurationsdatensatzes CRO noch vorgegebene Selektionskriterien, insbesondere eines oder mehrere weitere Optimierungskriterien, angewandt werden. Durch eine Einschränkung der Selektion, Interpolation bzw. einer nachfolgenden Optimierung auf die Pareto-Front PF wird der Raum möglicher Konfigurationen in der Regel erheblich eingeschränkt, wobei insbesondere nicht optimale Konfigurationen wegfallen. Die Selektion oder Interpolation des optimierten Konfigurationsdatensatzes CRO oder auch weitere Optimierungen werden so erheblich vereinfacht.

Optional kann die Abfolge aus dem genetischen Optimierungsverfahren, der Ermittlung der Pareto-Front PF und der Ermittlung des optimierten Konfigurationsdatensatzes CRO iterativ wiederholt werden. Auf diese Weise können in vielen Fällen ein größerer Raum möglicher Konfigurationen abgedeckt und robustere Konfigurationen gefunden werden. Dabei können in das genetische Optimierungsverfahren Konfigurationsdatensätze CR aus der Pareto-Front PF eingespeist werden, um so das genetische Optimierungsverfahren mit vorteilhaften Konfigurationen anzureichern. Eine entsprechende Rückführung von Konfigurationsdatensätzen CR der Pareto-Front PF vom Pareto-Optimierer PO zum Generator GEN ist in Figur 2 durch einen punktierten Pfeil angedeutet.

Der optimierte Konfigurationsdatensatz CRO wird bestimmungsgemäß zum Konfigurieren der Maschinensteuerung CRL ausgegeben und/oder direkt zur Maschinensteuerung CTL übermittelt, um diese zum optimierten Steuern der Maschine M zu konfigurieren. Die resultierende Konfiguration der Maschinensteuerung CTL führt zu einem Steuerverhalten, das gleichzeitig sowohl eine hohe Performanz als auch eine geringe Komplexität aufweist. Die letztgenannte Eigenschaft führt zu Konfigurationen, die in der Regel erheblich besser durch Experten interpretierbar und damit leichter validierbar und/oder weiterentwickelbar sind.

## Patentansprüche

1. Computerimplementiertes Verfahren zum Konfigurieren einer Maschinensteuerung (CTL) für eine Maschine (M), wobei
a) eine Vielzahl von jeweils eine Zusammenschaltung (CC) vorgegebener Steuerungskomponenten (C1-C4) spezifizierenden Konfigurationsdatensätzen (CR) generiert wird,
b) für eine jeweils spezifizierte Zusammenschaltung (CC) eine Performanz für ein Steuern der Maschine (M) mittels dieser Zusammenschaltung (CC) sowie eine Komplexität dieser Zusammenschaltung (CC) ermittelt werden,
c) für die Vielzahl von Konfigurationsdatensätzen (CR) eine Pareto-Front (PF) ermittelt wird, wobei eine Erhöhung der Performanz sowie eine Verringerung der Komplexität der jeweils spezifizierten Zusammenschaltung (CC) als Pareto-Zielkriterien verwendet werden, und
d) aus Konfigurationsdatensätzen der Pareto-Front (PF) ein optimierter Konfigurationsdatensatz (CRO) ermittelt und zum Konfigurieren der Maschinensteuerung (CTL) ausgegeben wird.

2. Verfahren nach Anspruch 1, **dadurch gekennzeichnet, dass** zum Ermitteln der Performanz einer jeweiligen Zusammenschaltung (CC) ein Simulationsmodell (SIM) der Maschine (M), ein datengetriebenes Modell der Maschine (M), die Maschine (M) selbst und/oder eine dazu ähnliche Maschine anhand der jeweiligen Zusammenschaltung (CC), insbesondere in einem geschlossenen Regelkreis gesteuert wird und eine daraus resultierende Performanz der Maschine (M) ermittelt wird.

3. Verfahren nach einem der vorhergehenden Ansprüche, **dadurch gekennzeichnet,**
**dass** zum Ermitteln der Komplexität einer jeweiligen Zusammenschaltung (CC) eine Anzahl darin enthaltener Steuerungskomponenten (C1-C4), Schnittstellen und/oder Regelschleifen, und/oder eine Baumtiefe eines die jeweilige Zusammenschaltung (CC) spezifizierenden Graphs ermittelt wird, und
**dass** aus der Anzahl der Steuerungskomponenten (C1-C4), Schnittstellen und/oder Regelschleifen, und/oder aus der Baumtiefe ein die Komplexität der jeweiligen Zusammenschaltung quantifizierender Komplexitätswert (CV) abgeleitet wird.

4. Verfahren nach Anspruch 3, **dadurch gekennzeichnet,**
**dass** für die Steuerungskomponenten (C1-C4), Schnittstellen und/oder Regelschleifen jeweils Gewichtswerte (W) eingelesen werden, und
**dass** als Anzahl der Steuerungskomponenten (C1-C4), Schnittstellen und/oder Regelschleifen einer jeweiligen Zusammenschaltung (CC) eine mit den jeweiligen Gewichtswerten (W) gewichtete Anzahl ermittelt wird.

5. Verfahren nach einem der vorhergehenden Ansprüche, **dadurch gekennzeichnet, dass**
der optimierte Konfigurationsdatensatz (CRO) aus den Konfigurationsdatensätzen der Pareto-Front (PF) selektiert oder durch Interpolation von Konfigurationsdatensätzen der Pareto-Front (PF) ermittelt wird.

6. Verfahren nach einem der vorhergehenden Ansprüche, **dadurch gekennzeichnet,**
**dass** eine Maschinentypangabe (MT) eingelesen wird, und
**dass** abhängig von der Maschinentypangabe (MT) maschinenspezifische Steuerungskomponenten zum Zusammenschalten vorgegeben werden.

7. Verfahren nach einem der vorhergehenden Ansprüche, **dadurch gekennzeichnet,**
**dass** einer jeweiligen Steuerungskomponente (C1-C4) ein Komponententyp und/oder ein Schnittstellentyp zugeordnet wird, und dass bei der Generierung eines jeweiligen Konfigurationsdatensatzes (CR) geprüft wird, ob Komponententypen und/oder Schnittstellentypen zusammenzuschaltender Steuerungskomponenten (C1-C4) kompatibel sind.

8. Verfahren nach einem der vorhergehenden Ansprüche, **dadurch gekennzeichnet, dass**
die Konfigurationsdatensätze (CR) durch ein performanzgetriebenes und/oder komplexitätsgetriebenes genetisches Optimierungsverfahren generiert werden.

9. Verfahren nach Anspruch 8, **dadurch gekennzeichnet, dass** die Konfigurationsdatensätze der Pareto-Front (PF) in das genetische Optimierungsverfahren eingespeist werden.

10. Verfahren nach Anspruch 8 oder 9, **dadurch gekennzeichnet, dass** eine Abfolge aus dem performanzgetriebenen und/oder komplexitätsgetriebenen genetischen Optimierungsverfahren, der Ermittlung der Pareto-Front (PF) und der Ermittlung des optimierten Konfigurationsdatensatzes (CRO) iterativ wiederholt wird.

11. Verfahren nach einem der vorhergehenden Ansprüche, **dadurch gekennzeichnet,**
**dass** die Maschine (M) ein Roboter, ein Motor, eine Werkzeugmaschine, eine Produktionsmaschine, eine Turbine, eine Fertigungsanlage, ein Kraftfahrzeug, ein 3D-Drucker, ein mechanisches System, ein elektrisches System, ein hydraulisches System oder ein anderes Gerät oder eine andere Anlage ist.

12. Konfigurationssystem (KS) zum Konfigurieren einer Maschinensteuerung (CTL) für eine Maschine (M), eingerichtet zum Ausführen eines Verfahrens nach einem der vorhergehenden Ansprüche.

13. Computerprogrammprodukt eingerichtet zum Ausführen eines Verfahrens nach einem der Ansprüche 1 bis 11.

14. Computerlesbares Speichermedium mit einem Computerprogrammprodukt nach Anspruch 13.
